# EUROPEAN PATENT APPLICATION

(11) **EP 0 889 571 A2**
(43) Date of publication of application: **07.01.1999**
(21) Application number: 98830371.5
(22) Date of filing: 18.06.1998
(51) Int. Cl.: H02J 3/28

(54) **An auxiliary electric supply apparatus**

(30) Priority: 04.07.1997 IT BO970411
(71) Applicant: G. BARGELLINI & C. S.p.A., I-40066 Pieve di Cento, Bologna (IT)
(72) Inventor: Bargellini, Giulio, 40066 Pieve di Cento (Bologna) (IT)
(74) Representative: Lanzoni, Luciano

(57) **Abstract**

The invention relates to an auxiliary power supply apparatus which can be used in particular in a local electric supply system (2) connected to a distribution grid (1) through limiting means (4) designed to enable electricity to be supplied only up to a preset value per unit time. The apparatus is equipped with power accumulating means (5) which can be connected to, to be charged by, the distribution grid (1) and/or another power source (10) and connected also to the local supply system (2) through automatically controlled connecting means (6). Means (4') are envisaged for measuring the power demand of users (3) connected to the local supply system, these measuring means being designed to activate the connecting means (6) so as to switch in the additional supply from the accumulation means (5) to the local supply system (2) at least when the measuring means (4') detect a value approaching said preset value or maintained at a level close to said preset value for a preset length of time.

## Description

The present invention relates to an auxiliary power supply apparatus that can be used in particular in local electric supply systems connected to a distribution grid or main grid.

It is well known that local electric supply systems are connected to the distribution grid through a power limiting device, usually an electromagnetic circuit breaker, designed to limit the electricity supplied in the standard unit of time according to the electricity supply contract.

In practice, when the power consumed by the users connected to the local supply system exceeds a preset value, the power limiting device disconnects the local system from the distribution grid. In the event of an overload, therefore, the power supply of all the users in the local system is cut.

To limit this problem, a number of devices have been devised. These devices are placed at the power outlets where non-priority users (that is to say, users that are not considered essential) are connected. If the demand rate reaches the limit value, these devices disconnect the non-priority users so as to reduce the total demand rate of the local system.

With devices of this kind, however, the limitation on the maximum power that can be used remains, since it is not possible to increase the power that can be drawn. In other words, at present, an increase in the power must be established by contract with the electricity supply authority on a permanent basis, that is to say, the maximum power that can be drawn cannot be increased for temporary requirements only.

The aim of the present invention is to overcome the above mentioned drawbacks by providing an electric supply apparatus which, in the event of an overload, is capable of providing an additional quantity of power from a reserve supply stored by appropriate accumulation means.

The apparatus disclosed can be used to exceed the "contractual" demand rate at which the limiting device is set because when an overload occurs, the accumulation means switch in their additional supply in parallel with the main supply so that the local supply system is not cut off.

Another advantage is that the invention can be used in combination with devices that disconnect non-priority outlets so as to guarantee the local electric supply even when the total demand is greater than the power supplied by the mains plus that supplied by the accumulation means. In this case, there is a first stage in which the "contractual" value is exceeded by all the users thanks to the operation of the accumulation means. Then, in a second stage, when the demand rate approaches the ceiling defined by the sum of the "contractual" power plus the contribution of the accumulation means, the device for cutting off the non-priority users comes into operation so that, once again, the power limiting device (circuit breaker) is not triggered. The user cut-off devices may be of the commercial type, that is to say, they may already be fitted to the local supply system. Since the accumulation means may operate independently of the mains connection and may constitute an independent power source, the present invention envisages the operation of the accumulation means not only in the event of overloads but also during breakdowns in the main supply (black-outs). Another advantage of the invention, therefore, is that the reserve power supply is also available during a mains power failure.

Since the apparatus disclosed works in parallel with the main supply, it comes into operation immediately when the mains power fails and, if used in combination with the cut-off devices of the type described above, it is capable of selecting the primary outlets to be supplied when there is no main supply.

Yet another advantage of the present invention is that the accumulation means can be recharged at the times when the demand is lowest. If used extensively, this feature enables the demand to be made constant over the period of twenty-four hours, reducing the peak consumption typical of daytime hours, especially mornings. At the same time, in those cases where the supply company applies different rates for electricity supplied at different times of day, money can also be saved because the invention allows electricity to be accumulated when it costs less and used later when it would cost more.

The technical characteristics of the invention according to the above mentioned aims are laid out in the claims below and the advantages of the disclosure are apparent from the detailed description which follows, with reference to the accompanying drawings, which illustrate a preferred embodiments of the invention and in which:

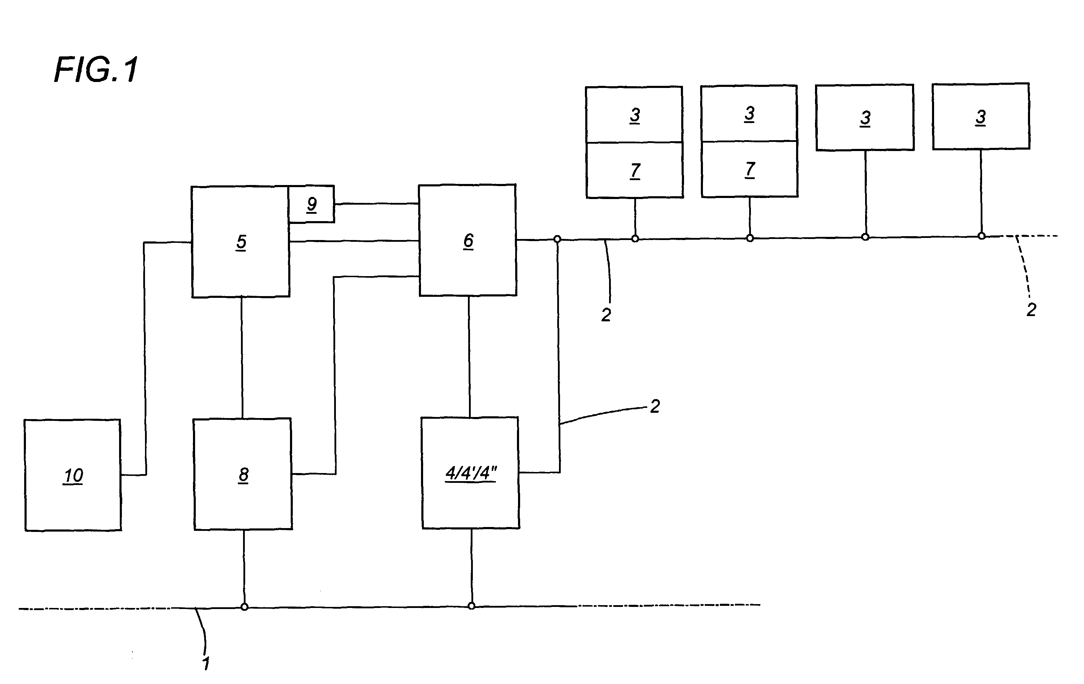

- Figure 1 is a block diagram of a possible embodiment of the present invention.

In Figure 1, the numeral 1 indicates a main electricity distribution grid to which a local electric supply system 2 is connected.

A plurality of users 3 are connected to the local system. Like the other parts described, these users are illustrated only schematically as function blocks.

The users 3 may be electrical household or industrial appliances of diverse kinds, means for lighting, heating, etc.

Between the distribution grid 1 and the local system 2 there is a power limiting device 4 which breaks the connection to the distribution grid 1 when the power exceeds a given limit, usually established by contract with the electricity supply authority, that is to say, when the local system is overloaded.

In other terms, when the total power requirement of the users 3 exceeds the established value, the power limiting device 4 isolates the local system 2 from the distribution grid 1.

The present invention envisages an auxiliary electric -supply apparatus that comprises means 5 for accumulating electrical energy consisting, for example, of accumulators connected to the distribution grid 1 which charges them.

In addition to the main supply, the accumulation means can, for recharging purposes, be connected to devices for converting energy of various kinds into electrical energy such as, for example, photovoltaic cells. These transducers are represented by function block 10 in Figure 1. In other words, the accumulation means 5 can be recharged by any appropriate energy source. This source may be the distribution grid 1, or a photovoltaic or other type of transducer 10.

The apparatus disclosed also comprises means 4' for measuring the energy consumed by the local system 2. These measuring means 4' may be built into the limiting device 4 as shown in Figure 1 or, in another solution, which is not illustrated and which may be of the commercial type, they may be separate from the limiting device.

Additional measuring means (schematically represented by 4" in Figure 1, included in the same function block as 4 and 4') may be envisaged to measure other physical quantities in different rooms (apartments, offices, storerooms, etc.) connected to the local electric supply system 2. Thus, it would be possible to measure temperature, luminosity or other such quantities for the purposes described below.

There are also connecting means 6 between the local system 2 and the accumulation means 5 designed to connect the accumulation means 5 to the local system 2.

During use, when the power demand of the users 3 detected by the measuring means 4' approaches (tends to reach) the overload value, the connecting means 6 connect the accumulation means 5 to the local system 2. The connection may also be made when a value close to the overload value is maintained for a defined length of time. In this way, in parallel with the main supply, the local system also receives an auxiliary supply which increases the total available power. The connecting means 6 also comprise appropriate phasing means designed to adjust the phase of the energy supplied by the accumulation means 5 to the parameters of the energy supplied by the grid 1.

Obviously, the increase supplied by the accumulation means 5 can be varied in accordance with the characteristics of the system and/or the requirements of the users, thus changing the power supplied by the accumulation means and/or the length of time the power can be supplied for.

As also mentioned above, the apparatus disclosed by the present invention can be connected to a device of the type that cuts out non-priority power outlets. This device is represented in Figure 1 by the blocks 7 located next to two of the users 3. A device of this kind comprises a plurality of socket outlet connections 7 designed to disconnect the appliance connected when an overload occurs.

The use of a device of this kind, in combination with the accumulation means 5, makes it possible to disconnect non-priority outlets. Thus, when the measuring means 4' detect a value that is tending to the total of the "contractual" power plus the auxiliary supply from the accumulation means 5, the socket outlets 7 are tripped. The outlets 7 constitute automatic circuit breaking or limiting means and are controlled, for example, by waves travelling on the lines of the local system 2, to isolate the users 3 from the system or limit the power that can be supplied through them.

The accumulation means 5 can also be used during a black-out, when even the distribution grid 1 does not supply power. For this mode of operation, appropriate means, again represented by the block 4' in the drawing, are envisaged for measuring the power feeding into the system. The measuring means 4' switch on the connecting means 6 in such a way as to appropriately connect the accumulation means 5 to the local system 2 when the mains supply fails.

When a black-out occurs, the supplementary measuring means 4" described above can be used to drive any limiters/circuit breakers 7 in such a way as to establish the limiting/breaking priority according to the values measured. For example, the apparatus might supply less power to the lighting system (or supply power to some rooms only) when the supplementary measuring means 4" detect luminosity above a given value. In the same way, it is possible to establish a priority for supplying power to the air conditioning and/or heating system in accordance with the temperature or humidity measured. As in the case of a black-out, the users and/or branches of the local system can also be controlled in this way when the local system is close to an overload.

The apparatus disclosed by the present invention may comprise timing means 8 which, in the embodiment being described, are connected to the accumulation means 5 and to the connecting means 6. In particular, the timing means 8 are located and operate between the distribution grid 1 and the accumulation means 5. This makes it possible to set the charging time of the accumulation means 5. In other words, the timing means allow the accumulation means 5 to be recharged during hours when this costs less. The connection between the timing means 8 and the connecting means 6 represents the possibility of controlling the connection between the accumulation means 5 and the local system 2 during preset hours. For example, if demand has its peak during daytime hours, especially in the morning, the apparatus may be programmed to accumulate energy during the night and supply it during peak hours. The accumulation means 5 may be used in combination with means 9 for detecting the state of charge of the accumulation means 5 so that the latter are connected to the local system 2 according to the state of charge detected. In practice, the connection between the accumulation means 5 and the local system 2 may be made to depend not only on the time but also on the state of charge of the accumulation means so as to guarantee a reserve supply at all times.

In short, the system may envisage measuring means 4' capable of detecting the demand of the local system 2 and the power supplied by the grid 1 so as to integrate the main power supply with the accumulation means 5 in the event of an overload or to substitute the main power supply in the event of a grid power failure.

In other words, if no feed current is detected upstream of the limiting device, the apparatus comes into operation as a reserve power supply that substitutes the main power supply, while if the demand detected downstream of the limiting device indicates an imminent overload, the accumulation means are used to contribute to the main power supply. Moreover, besides the characteristics just described, it is possible to store energy and use it at different times.

In short, the operating logic of the apparatus, which may be created with microprocessor devices capable of dynamically controlling the priority level of the users and/or of the branches of the system according to the state of the local system (presence or absence of the main power supply, imminent overload, etc.).

The invention described can be subject to modifications and variations without thereby departing from the scope of the inventive concept. Moreover, all the details of the invention may be substituted by technically equivalent elements.

## Claims

1. An auxiliary power supply apparatus which can be used in particular in a local electric supply system connected to a distribution grid through limiting means designed to enable electricity to be supplied only up to a preset value per unit time, said apparatus being characterized in that it is equipped with power accumulating means (5) which, when required, can be connected to, to be charged by, the distribution grid (1) and/or another power source (10) and connected also to the local supply system (2), in parallel with the distribution grid (1), through connecting means (6) triggered when required.

2. An auxiliary power supply apparatus which can be used in particular in a local electric supply system connected to a distribution grid through limiting means designed to enable electricity to be supplied only up to a preset value per unit time, said apparatus being characterized in that it is equipped with power accumulating means (5) which, when required, can be connected to, to be charged by, the distribution grid (1) and/or another power source (10) and connected also to the local supply system (2), in parallel with the distribution grid (1), through connecting means (6) triggered when required; means (4') being envisaged for measuring the demand of users (3) connected to the local supply system, these measuring means (4') being designed to trigger the connecting means (6) so as to switch in the additional supply from the accumulation means (5) to the local supply system (2) at least when the measuring means (4') detect a value approaching said preset value or maintained at a level close to said preset value for a preset length of time.

3. The apparatus according to claim 2 characterized in that the local system has automatic circuit breaking and/or limiting means (7), located at non-priority users and/or branches and connected to said measuring means (4'), so as to disconnect said non-priority users and/or branches of the local system (2), that is, to limit the power supplied to them, when said measuring means (4') detect a value close to the sum of said preset value plus the contribution of the accumulation means (5).

4. The apparatus according to claim 2 characterized in that it is equipped with means (4') for measuring the power supplied to the local system (2) by the distribution grid (1), said measuring means (4') being connected to the connecting means (6) and designed to activate the latter when the value measured tends to zero, that is, when the grid (1) is not supplying any power.

5. The apparatus according to claim 4 characterized in that the local system has automatic circuit breaking and/or limiting means (7), located at non-priority users and/or branches and connected to said measuring means (4'), so as to disconnect said non-priority users and/or branches of the local system (2), that is, to limit the power supplied to them, when the value measured tends to zero, that is, when the grid (1) is not supplying any power.

6. The apparatus according to claim 2 characterized in that it is equipped with timing means (8) located between the accumulation means (5) and the distribution grid (1) designed to enable said accumulation means (5) to be recharged at preset times.

7. The apparatus according to claim 2 characterized in that it is equipped with timing means (8) located between the accumulation means (5) and the distribution grid (1) and connected to the connecting means (6) designed to enable said accumulation means (5) to be recharged at a first preset time and to connect said accumulation means to said local system (2) at preset times other than the first.

8. The apparatus according to any of the foregoing claims characterized in that it comprises supplementary means (4") for measuring given physical quantities in rooms connected up in the local electric supply system (2).

9. The apparatus according to claim 1 or 2 characterized in that said other energy source (10) comprises a transducer designed to convert a non-electrical energy source into electrical energy.
